# EUROPEAN PATENT APPLICATION

(11) **EP 4 768 751 A1**
(43) Date of publication of application: **01.07.2026**
(21) Application number: 24856479.1
(22) Date of filing: 21.08.2024
(51) Int. Cl.: F16H 1/16, B62D 5/04, F16C 23/08, F16C 35/073, F16F 15/124, F16H 55/24, F16J 15/10

(54) **WORM REDUCTION GEAR**

(30) Priority: 24.08.2023 JP 2023136050
(71) Applicant: NSK Steering & Control, Inc., Tokyo, 141-0032 (JP)
(72) Inventor: OKI, Yasuyuki, Maebashi-shi, Gunma 371-8527 (JP)
(74) Representative: Müller-Boré & Partner Patentanwälte PartG mbB
(86) International application number: PCT/JP2024/029648
(87) International publication number: WO 2025/041791

(57) **Abstract**

A worm gear reducer capable of suppressing the occurrence of unpleasant abnormal noise due to metal-to-metal contact generated at locations other than an engaging portion between wheel teeth and worm teeth is provided. A worm 14 has an annular protruding portion 40 at a portion located on an inside in a radial direction of an inner ring 28, the annular protruding portion 40 having two contact end portions 41 at end portions on both sides in an axial direction of an outer circumferential surface thereof, the two contact end portions restricting further inclination of the worm 14 with respect to the inner ring 28 by coming into contact with an inner circumferential surface of the inner ring 28 when the worm 14 is inclined to a maximum inclination angle θₘₐₓ, and each of the two contact end portions 41 composed of a convex curved surface.

## Description

### TECHNICAL FIELD

The present disclosure relates to a worm gear reducer incorporated into various mechanical devices such as an electric power steering device.

### BACKGROUND ART

A worm gear reducer is used to reduce a high rotational speed output from an electric motor to a rotational speed suitable for a mechanical device to be used, and to obtain a large torque from a small power source.

For example, in the field of steering devices, electric power steering devices that use an electric motor as an auxiliary power source to reduce a force required for a driver to operate a steering wheel have become widespread, and such electric power steering devices are provided with a worm gear reducer in order to increase torque of the electric motor.

A worm gear reducer includes a housing; a worm wheel; and a worm.

The worm wheel has wheel teeth on an outer circumferential surface thereof and is rotatably supported inside the housing.

The worm has worm teeth that engage with the wheel teeth on an outer circumferential surface thereof and is rotatably supported inside the housing.

An output shaft of the electric motor is connected to an end portion on a first side in an axial direction of the worm so as to be capable of torque transmission. Torque of the output shaft of the electric motor is transmitted to the worm wheel through the worm and is increased, and then is applied as auxiliary power to a steering force transmission member such as a steering shaft or a pinion shaft or a rack shaft of a steering gear unit. As a result, a force required for a driver to operate a steering wheel is reduced.

In a worm gear reducer, inevitable backlash exists at an engaging portion between wheel teeth and worm teeth based on dimensional tolerances and assembly tolerances of respective parts of the worm gear reducer. Due to the presence of such backlash, when a rotational direction of a steering wheel is changed, that is, when a rotational direction of the worm is changed, unpleasant teeth rattling noise may occur at the engaging portion.

WO2004/052712 describes an electric power steering device equipped with a worm gear reducer having a structure for suppressing the generation of teeth rattling noise at the engaging portion between the wheel teeth and the worm teeth.

In a worm gear reducer described in WO2004/052712, a support bearing for rotatably supporting an end portion on a first side in an axial direction of a worm with respect to a housing is composed of a deep-groove ball bearing. A minute gap for allowing the worm to be inclined with respect to an inner ring of the support bearing is formed between an inner circumferential surface of the inner ring of the support bearing and an outer circumferential surface of the end portion on the first side in the axial direction of the worm. That is, based on the presence of the minute gap and an internal clearance of the support bearing, the worm is capable of swing displacement with respect to the housing.

Further, by a biasing means provided between the housing and an end portion on a second side in the axial direction of the worm, the end portion on the second side in the axial direction of the worm is elastically biased toward a worm wheel side. As a result, backlash at the engaging portion between the wheel teeth and the worm teeth is suppressed, and the occurrence of teeth rattling noise at the engaging portion is suppressed when a rotational direction of a steering wheel is changed.

Further, two worm dampers that are arranged on both sides in the axial direction of the inner ring of the support bearing and elastically support the worm in the axial direction with respect to the inner ring are provided. The worm can displace in the axial direction with respect to the inner ring as the worm dampers elastically deform. As a result, when the rotational direction of the steering wheel is changed, momentum of collision between tooth surfaces of the wheel teeth and the worm teeth is reduced, and the occurrence of teeth rattling noise at the engaging portion between the wheel teeth and the worm teeth is suppressed.

### CITATION LIST

### PATENT LITERATURE

Patent Literature 1: WO2004/052712

### SUMMARY OF INVENTION

### TECHNICAL PROBLEM

However, even in the worm gear reducer described in WO2004/052712, there is room for improvement from the aspect of further suppressing the occurrence of abnormal noise due to metal-to-metal contact.

An object of the present disclosure is to achieve a worm gear reducer that is capable of suppressing the occurrence of abnormal noise due to metal-to-metal contact generated at locations other than an engaging portion between wheel teeth and worm teeth.

### SOLUTION TO PROBLEM

The inventors of the present disclosure have conducted extensive studies on the causes of the occurrence of abnormal noise due to metal-to-metal contact generated at locations other than an engaging portion between wheel teeth and worm teeth.

In a worm gear reducer including a biasing means, an annular protruding portion that protrudes farther to an outside in a radial direction than portions adjacent on both sides in the axial direction is provided at a portion of a worm that is located on an inside in a radial direction of an inner ring, and a maximum inclination angle of the worm with respect to the inner ring of a support bearing is restricted within an appropriate range by arranging an outer circumferential surface of the annular protruding portion closely facing an inner circumferential surface of the inner ring.

When the worm is inclined to the maximum inclination angle with respect to the inner ring, corner portions existing at connecting portions between an outer circumferential surface and side surfaces in the axial direction of the annular protruding portion come into contact with an inner circumferential surface of the inner ring. It was learned that when the worm displaces in the axial direction in this state, so-called stick-slip phenomenon occurs in which sliding and sticking are alternately repeated in a short time, and abnormal noise called stick-slip noise occurs. The present disclosure has been completed based on such findings.

A worm gear reducer of an aspect of the present disclosure includes:
a housing;
a worm wheel having wheel teeth on an outer circumferential surface thereof and rotatably supported inside the housing;
a worm having worm teeth on an outer circumferential surface thereof that engage with the wheel teeth and rotatably supported inside the housing;
a support bearing including an outer ring fixed to the housing and an inner ring externally fitted to an end portion on a first side in an axial direction of the worm with a clearance fit, the support bearing supporting the end portion on the first side in the axial direction of the worm with respect to the housing so as to be capable of rotation, swing displacement, and axial displacement;
a biasing means elastically biasing an end portion on a second side in the axial direction of the worm toward a side of the worm wheel; and
two worm dampers arranged on both sides in the axial direction of the inner ring and elastically supporting the worm in the axial direction with respect to the inner ring.

The worm has an annular protruding portion at a portion located on an inside in a radial direction of the inner ring, the annular protruding portion protruding farther to an outside in the radial direction than portions adjacent to both sides in the axial direction thereof.

The annular protruding portion has two contact end portions at end portions on both sides in the axial direction of an outer circumferential surface thereof, the two contact end portions restricting further inclination of the worm with respect to the inner ring by coming into contact with an inner circumferential surface of the inner ring when the worm is inclined to a maximum inclination angle with respect to the inner ring.

Each of the two contact end portions is composed of a convex curved surface.

With the worm gear reducer of an aspect of the present disclosure, a radius of curvature of the convex curved surface can be 0.2 mm or more and 3.0 mm or less.

With the worm gear reducer of an aspect of the present disclosure,
the worm can have an annular recessed portion that opens at a middle portion in the axial direction of the outer circumferential surface of the annular protruding portion; and an O-ring that is elastically compressed between a bottom surface of the annular recessed portion and the inner circumferential surface of the inner ring can be provided.

With the worm gear reducer of an aspect of the present disclosure, an arithmetic average roughness Ra of the two contact end portions can be 1.6 µm or less.

### EFFECT OF INVENTION

With the worm gear reducer according to an aspect of the present disclosure, the occurrence of unpleasant abnormal noise between the inner ring of the support bearing and the worm can be effectively suppressed.

### BRIEF DESCRIPTION OF DRAWINGS

[FIG. 1] FIG. 1 is a view illustrating an electric power steering device incorporating a worm gear reducer of a first example of an embodiment of the present disclosure.
[FIG. 2] FIG. 2 is a cross-sectional view taken along line A-A of FIG. 1.
[FIG. 3] FIG. 3 is an enlarged view of portion B of FIG. 2.
[FIG. 4] FIG. 4 is an enlarged view corresponding to portion C of FIG. 3.
[FIG. 5] FIG. 5(A) is a partial cross-sectional view illustrating a contact state between an inner circumferential surface of an inner ring of a support bearing and an annular protruding portion of a worm when the worm swings with respect to the inner ring in the worm gear reducer of the first example, and FIG. 5(B) is a view similar to FIG. 5(A), illustrating a worm gear reducer of a comparative example of the first example.
[FIG. 6] FIG. 6 is an exploded perspective view of an upper left portion of FIG. 2.
[FIG. 7] FIG. 7 is a view of a left side of FIG. 2 with a cover and a retaining ring removed and viewed from the left side of FIG. 2.
[FIG. 8] FIG. 8 is a view corresponding to FIG. 4, illustrating a worm gear reducer of a second example of an embodiment of the present disclosure.
[FIG. 9] FIG. 9 is a view corresponding to FIG. 4, illustrating a worm gear reducer of a third example of an embodiment of the present disclosure.
[FIG. 10] FIG. 10 is a view corresponding to FIG. 4, illustrating a worm gear reducer of a fourth example of an embodiment of the present disclosure.

### DESCRIPTION OF EMBODIMENTS

### [First Example]

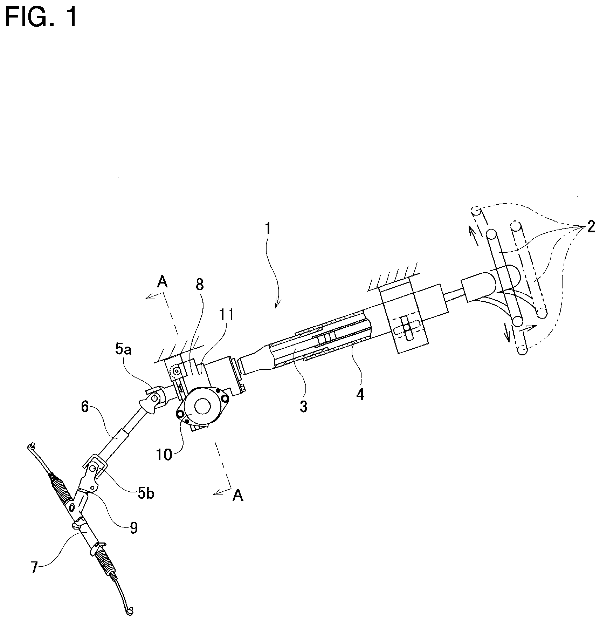

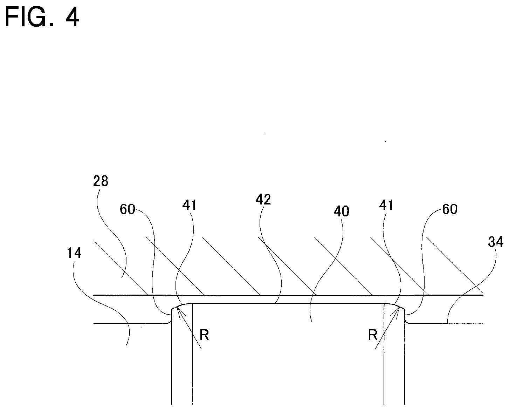

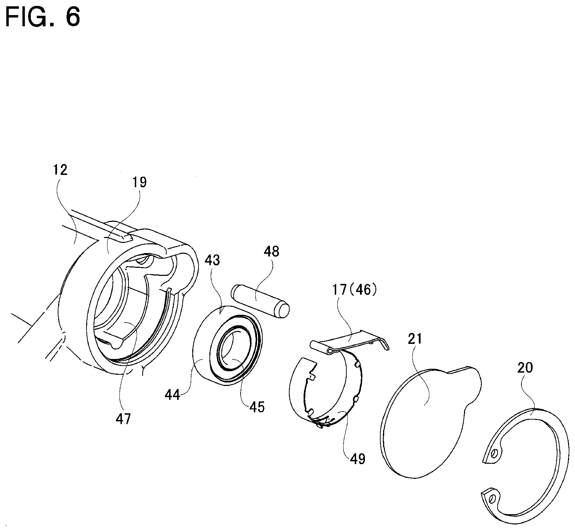

A first example of an embodiment of the present disclosure will be described with reference to FIG. 1 to FIG. 7.

The worm gear reducer of the present example is widely applicable not only to a worm gear reducer incorporated in an electric power steering device, but also to worm gear reducers incorporated in various mechanical devices. Further, the worm gear reducer of the present example is applicable to any type of electric power steering device, such as a column-assist type that applies auxiliary power to a steering shaft that is rotatably supported inside a steering column, a pinion-assist type that applies auxiliary power to a pinion shaft of a steering gear unit, and a rack-assist type that applies auxiliary power to a rack shaft of a steering gear unit. In the following, the worm gear reducer of the present example will be described by taking a case where the worm gear reducer is applied to a column-assist type electric power steering device as an example.

As illustrated in FIG. 1, the electric power steering device 1 has a steering wheel 2; a steering shaft 3; a steering column 4; a pair of universal joints 5a, 5b; an intermediate shaft 6; a steering gear unit 7; and an electric assist device 8.

The steering wheel 2 is supported and fixed to a rear end portion of the steering shaft 3. The steering shaft 3 is rotatably supported inside the steering column 4 which is supported by a vehicle body. A front end portion of the steering shaft 3 is connected to a pinion shaft 9 of the steering gear unit 7 through a rear-side universal joint 5a, an intermediate shaft 6, and a front-side universal joint 5b.

Therefore, when a driver rotates the steering wheel 2, rotation of the steering wheel 2 is transmitted to the pinion shaft 9 through the steering shaft 3, the pair of universal joints 5a, 5b, and the intermediate shaft 6. Rotation of the pinion shaft 9 is converted into linear motion of a rack shaft (not illustrated) of the steering gear unit 7 that meshes with the pinion shaft 9. As a result, a steering angle corresponding to an amount of rotational operation of the steering wheel 2 is applied to a pair of steered wheels.

The electric assist device 8 has an electric motor 10 which is an auxiliary power source; and a worm gear reducer 11. The electric assist device 8 increases auxiliary power of the electric motor 10 by the worm gear reducer 11 and then applies the auxiliary power to the front end portion of the steering shaft 3. As a result, force required for a driver to rotationally operate the steering wheel 2 is reduced.

The worm gear reducer 11 has a housing 12; a worm wheel 13; a worm 14; a support bearing 15; two worm dampers 16; and a biasing means 17.

The housing 12 has a wheel housing portion 18; and a worm housing portion 19 having a central axis that is in a skewed position relative to a central axis of the wheel housing portion 18, and having a middle portion in the axial direction that opens to the wheel housing portion 18. The housing 12 is connected and fixed to a front end portion of the steering column 4.

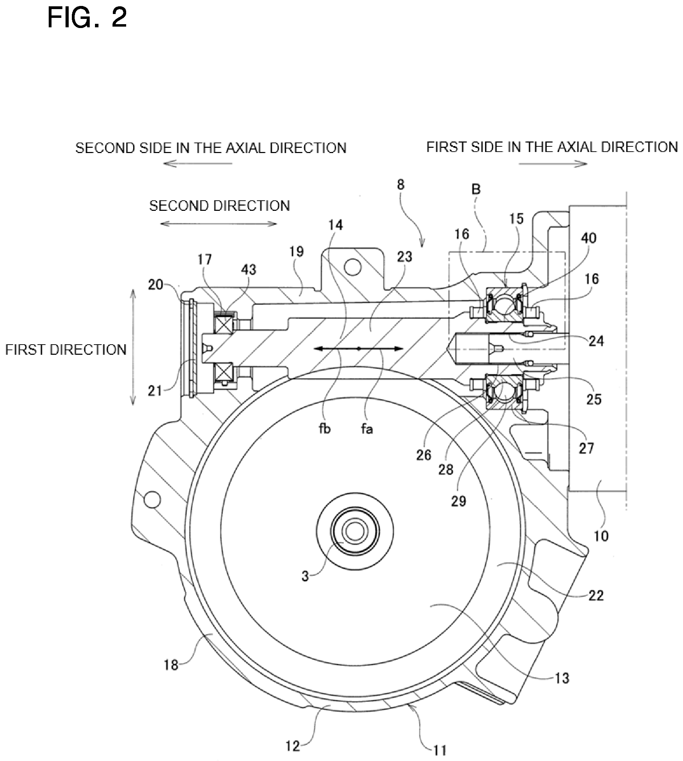

The wheel housing portion 18 is formed in a cylindrical shape. In FIG. 2, the central axis of the wheel housing portion 18 extends in a front-rear direction. The wheel housing portion 18 is arranged so as to be coaxial with the steering column 4.

The worm housing portion 19 is formed in a cylindrical shape and has openings at end portions on both sides in the axial direction. In FIG. 2, a central axis of the worm housing portion 19 extends in a left-right direction.

In the following description, regarding the worm housing portion 19 and each member housed in the worm housing portion 19, a first side in the axial direction is a right side in FIG. 2, and a second side in the axial direction is a left side in FIG. 2.

An opening on the first side in the axial direction of the worm housing portion 19 is closed by the electric motor 10 connected and fixed to the housing 12. An opening on the second side in the axial direction of the worm housing portion 19 is closed by a cover 21 attached to the opening by using a retaining ring 20.

The worm wheel 13 has wheel teeth 22 on an outer circumferential surface thereof and is rotatably supported inside the housing 12. Specifically, the worm wheel 13 is housed inside the wheel housing portion 18 and is externally fitted to and fixed to a front end portion of the steering shaft 3 that is rotatably supported inside the wheel housing portion 18.

The worm 14 has worm teeth 23 that engage with the wheel teeth 22 at a middle portion in the axial direction on an outer circumferential surface thereof, and is rotatably supported inside the housing 12. Specifically, the worm 14 is housed inside the worm housing portion 19 and is rotatably supported with respect to the worm housing portion 19 by the support bearing 15 and another support bearing 43.

An end portion on the first side in the axial direction of the worm 14 is connected to a tip end portion of an output shaft 25 of the electric motor 10 by spline engagement or through a coupling so as to allow torque transmission, swing displacement, and axial displacement. In the present example, the worm 14 has a female spline portion 24 on an inner circumferential surface of the end portion on the first side in the axial direction. The female spline portion 24 is spline-engaged with a male spline portion 26 provided on an outer circumferential surface of the tip end portion of the output shaft 25 of the electric motor 10. As a result, the end portion on the first side in the axial direction of the worm 14 is connected to the tip end portion of the output shaft 25 so as to allow torque transmission, swing displacement, and axial displacement.

The support bearing 15 includes an outer ring 27 fixed to the housing 12, and an inner ring 28 externally fitted with a clearance fit to the end portion on the first side in the axial direction of the worm 14, and supports the end portion on the first side in the axial direction of the worm 14 with respect to the housing 12 so as to allow rotation, swing displacement, and axial displacement.

In the present example, the support bearing 15 is composed of a four-point contact type ball bearing. That is, the support bearing 15 has an outer ring 27; an inner ring 28; and a plurality of rolling elements 29 each composed of a ball and arranged between a gothic-arch-groove-type outer ring raceway provided on an inner circumferential surface of the outer ring 27 and a gothic-arch-groove-type inner ring raceway provided on an outer circumferential surface of the inner ring 28.

In the present example, the outer ring 27 is internally fitted and fixed to an end portion on the first side in the axial direction of the worm housing portion 19. Specifically, the outer ring 27 is fitted with a clearance fit inside a cylindrical surface shaped fitting surface portion 30 provided on an inner circumferential surface of the end portion on the first side in the axial direction of the worm housing portion 19. Furthermore, the outer ring 27 is sandwiched from both sides in the axial direction by a stepped surface 31 facing the first side in the axial direction, the stepped surface 31 being provided in a portion of the worm housing portion 19 adjacent to the second side in the axial direction of the fitting surface portion 30, and by a retaining ring 32 locked to a portion of the worm housing portion 19 adjacent to the first side in the axial direction of the fitting surface portion 30.

In the present example, the inner ring 28 is externally fitted to an outer circumferential surface of the end portion on the first side in the axial direction of the worm 14 with a clearance fit.

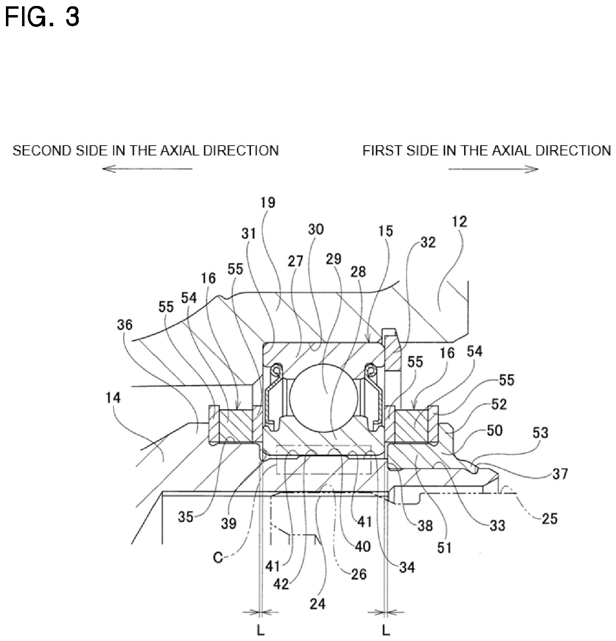

In the present example, as illustrated in FIG. 3, the outer circumferential surface of the end portion on the first side in the axial direction of the worm 14 is formed in a stepped cylindrical shape of which an outer diameter increases stepwise as going toward the second side in the axial direction from the first side in the axial direction. Specifically, the outer circumferential surface of the end portion on the first side in the axial direction of the worm 14 has, in order from the first side in the axial direction, a small diameter portion 33, a medium diameter portion 34, a large diameter portion 35, and a flange portion 36.

The small diameter portion 33 is formed in a substantially cylindrical shape. The worm 14 has an engaging groove 37 over an entire circumference at an end portion on the first side in the axial direction of the small diameter portion 33.

The medium diameter portion 34 is formed in a substantially cylindrical shape and has an outer diameter larger than an outer diameter of the small diameter portion 33. The small diameter portion 33 and the medium diameter portion 34 are connected by a small-diameter-side stepped surface 38 facing the first side in the axial direction.

The large diameter portion 35 is formed in a substantially cylindrical shape and has an outer diameter larger than an outer diameter of the medium diameter portion 34. The medium diameter portion 34 and the large diameter portion 35 are connected by a large-diameter-side stepped surface 39 facing the first side in the axial direction.

The flange portion 36 is formed in a circular ring shape and protrudes toward an outside in a radial direction from a portion adjacent to the second side in the axial direction of the large diameter portion 35.

In the present example, the inner ring 28 is externally fitted to the medium diameter portion 34 with a clearance fit. Therefore, a clearance in the radial direction exists between an inner circumferential surface of the inner ring 28 and the medium diameter portion 34. Based on existence of the clearance in the radial direction between the inner circumferential surface of the inner ring 28 and the medium diameter portion 34, and existence of an internal clearance of the support bearing 15, the support bearing 15 supports the end portion on the first side in the axial direction of the worm 14 with respect to the worm housing portion 19 so as to be capable of swing displacement. Further, based on existence of the clearance in the radial direction between the inner circumferential surface of the inner ring 28 and the medium diameter portion 34, the worm 14 is capable of axial displacement with respect to the inner ring 28.

The worm 14 has an annular protruding portion 40 at a portion located on an inner side in the radial direction of the inner ring 28, the annular protruding portion protruding farther to the outside in the radial direction than adjacent portions on both axial sides thereof.

In the present example, the annular protruding portion 40 is provided over an entire circumference at a middle portion in the axial direction of the medium diameter portion 34. An outer diameter (maximum outer diameter) of the annular protruding portion 40 is smaller than an inner diameter of the inner ring 28, and a dimension in the axial direction of the annular protruding portion 40 is smaller than a dimension in the axial direction of the inner circumferential surface of the inner ring 28. The outer diameter of the annular protruding portion 40 is not limited to this, however, it can be made preferably smaller than the inner diameter of the inner ring 28 by about 0.005 mm or more and 0.08 mm or less, and more preferably by about 0.01 mm or more and 0.05 mm or less. In addition, a dimension in the axial direction of the annular protruding portion 40 is not limited to this, however, it can be made preferably smaller than a dimension in the axial direction of the inner ring 28 by about 3.0 mm or more and 8.0 mm or less, and more preferably by about 4.0 mm or more and 7.0 mm or less.

The annular protruding portion 40 has two contact end portions 41 at end portions on both sides in the axial direction of the outer circumferential surface thereof. Specifically, the two contact end portions 41 are provided at connecting portions between a middle portion in the axial direction of the outer circumferential surface of the annular protruding portion 40 and end surfaces 60 in the axial direction. In the present example, the middle portion in the axial direction of the outer circumferential surface of the annular protruding portion 40 is composed of a cylindrical surface portion 42 of which an outer diameter does not change in the axial direction, and the end surfaces 60 in the axial direction are composed of flat surfaces perpendicular to a central axis of the worm 14.

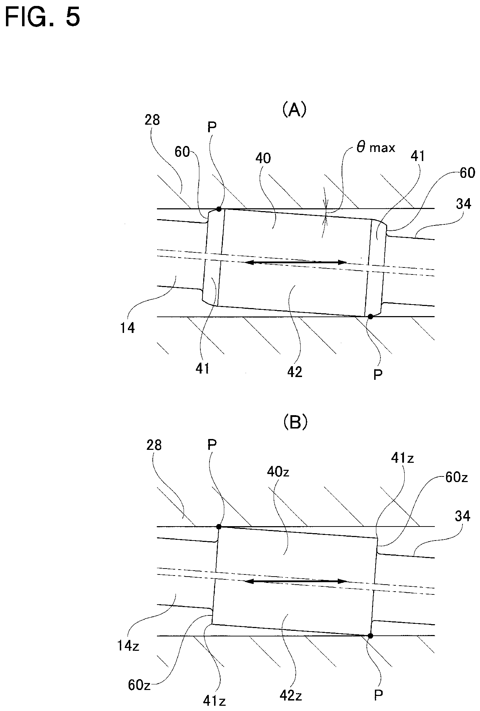

As illustrated in FIG. 5(A), the two contact end portions 41 restrict further inclination of the worm 14 relative to the inner ring 28 by coming into contact with the inner circumferential surface of the inner ring 28 when the worm 14 is inclined relative to the inner ring 28 up to a maximum inclination angle θₘₐₓ. When the worm 14 is inclined relative to the inner ring 28 up to the maximum inclination angle θₘₐₓ, the two contact end portions 41 come into contact with the inner circumferential surface of the inner ring 28 at end portions on radially opposite sides from each other (portions P in FIG. 5(A)). For example, as illustrated in FIG. 5(A), when the worm 14 is inclined in a direction away from the worm wheel 13 as going toward the second side in the axial direction, an end portion of a contact end portion 41 on the first side in the axial direction which is on a side closer to the worm wheel 13 comes into contact with an inner circumferential surface of a portion on the first side in the axial direction of the inner ring 28, and an end portion of a contact end portion 41 on the second side in the axial direction which is on a side farther from the worm wheel 13 comes into contact with an inner circumferential surface of a portion on the second side in the axial direction of the inner ring 28.

Each of the two contact end portions 41 is composed of a convex curved surface. That is, the two contact end portions 41 are arranged with the cylindrical surface portion 42 interposed therebetween and are composed of two convex curved surfaces facing directions opposite to each other.

Specifically, the two contact end portions 41 are composed of two convex arc-shaped cross sections that are inclined in directions toward the inside in the radial direction as going away from each other in the axial direction. The two contact end portions 41 and the cylindrical surface portion 42 are smoothly connected to each other so that the end portions in the axial direction have a common tangent.

With the worm gear reducer 11 of the present example, by configuring each of the two contact end portions 41 with a convex curved surface, generation of abnormal noise called stick-slip noise between the inner ring 28 of the support bearing 15 and the worm 14 can be effectively suppressed.

As in a structure of a comparative example illustrated in FIG. 5(B), when contact end portions 41z, which are connecting portions between a cylindrical surface portion 42z configuring an outer circumferential surface of an annular protruding portion 40z of a worm 14z and end surfaces 60z in the axial direction, are composed of sharp pointed edge portions or corner portions, each of the contact end portions 41z is likely to come into edge contact with the inner circumferential surface of the inner ring 28 and get caught. As a result, when the worm 14z displaces in the axial direction in a state where each of the contact end portions 41z is in contact with the inner circumferential surface of the inner ring 28, sliding and sticking are alternately repeated in a short time, so-called stick-slip phenomenon occurs, and abnormal noise called stick-slip noise is likely to be generated.

In contrast, in the present example, as illustrated in FIG. 5(A), the two contact end portions 41 provided at the connecting portions between the cylindrical surface portion 42 of the annular protruding portion 40 of the worm 14 and the end surfaces 60 in the axial direction are each composed of a convex curved surface. Therefore, each contact end portion 41 is less likely to come into edge contact with the inner circumferential surface of the inner ring 28 and is less likely to get caught. Accordingly, even when the worm 14 displaces in the axial direction in a state where each contact end portion 41 is in contact with the inner circumferential surface of the inner ring 28, the stick-slip phenomenon is less likely to occur, and generation of abnormal noise can be effectively suppressed.

There are no sharp pointed edge portions or corner portions extending in a circumferential direction at the two contact end portions 41 or at connecting portions between the two contact end portions 41 and the cylindrical surface portion 42. As long as such edge portions or corner portions do not exist, shapes of the convex curved surfaces configuring the two contact end portions 41 are arbitrary. A radius of curvature R of the convex curved surfaces configuring the two contact end portions 41 is not particularly limited; however, from the viewpoint of more effectively suppressing occurrence of the stick-slip phenomenon and more effectively suppressing generation of abnormal noise, it can be preferably about 0.2 mm or more and 3.0 mm or less, and more preferably about 0.5 mm or more and 1.5 mm or less.

In the present example, an arithmetic average roughness Ra of the two contact end portions 41 is preferably 1.6 µm or less, and more preferably 0.8 µm or less.

By setting the arithmetic average roughness Ra of the two contact end portions 41 to 1.6 µm or less, a frictional engagement force of each contact end portion 41 with respect to the inner circumferential surface of the inner ring 28 can be made smaller. Accordingly, occurrence of the stick-slip phenomenon between each contact end portion 41 and the inner circumferential surface of the inner ring 28 can be more effectively suppressed, and generation of abnormal noise can be more effectively suppressed.

In the present example, grease as a lubricant is interposed between the inner circumferential surface of the inner ring 28 and an outer circumferential surface of the annular protruding portion 40. That is, in the present example, the two contact end portions 41 come into contact with the inner circumferential surface of the inner ring 28 through the grease. As the grease, grease containing an extreme-pressure additive, such as molybdenum grease, can be preferably used.

By interposing the grease, the two contact end portions 41 come into contact with the inner circumferential surface of the inner ring 28 through the grease, so that occurrence of the stick-slip phenomenon between the two contact end portions 41 and the inner circumferential surface of the inner ring 28 can be effectively prevented. From this aspect as well, generation of abnormal noise can be effectively suppressed.

The worm gear reducer 11 of the present example further includes an annular-shaped spacer 50 externally fitted and fixed to the small diameter portion 33 of the end portion on the first side in the axial direction of the worm 14. The spacer 50 has a cylindrical portion 51; a circular ring-shaped flange portion 52 protruding toward the outside in the radial direction from an end portion on the first side in the axial direction of the cylindrical portion 51; and a crimped portion 53 extending toward the first side in the axial direction from an inner end portion in the radial direction of the end portion on the first side in the axial direction of the cylindrical portion 51. An outer diameter of a portion of the cylindrical portion 51 located farther to the second side in the axial direction than the flange portion 52 is equal to an outer diameter of the large diameter portion 35.

The spacer 50 is externally fitted and fixed to the small diameter portion 33 by press-fitting the cylindrical portion 51 onto the small diameter portion 33 and bringing an inside portion in the radial direction of a side surface on the second side in the axial direction of the cylindrical portion 51 into contact with the small-diameter-side stepped surface 38, and by engaging a half portion on the first side in the axial direction of the crimped portion 53, which is a tip half portion thereof, with the engaging groove 37. The crimped portion 53 of the spacer 50 is formed in a simple cylindrical shape in a state before the spacer 50 is externally fitted and fixed to the small diameter portion 33, and when the spacer 50 is externally fitted and fixed to the small diameter portion 33, the half portion on the first side in the axial direction thereof is plastically deformed toward the inside in the radial direction to engage with the engaging groove 37.

In the present example, the inner ring 28 which is externally fitted to the medium diameter portion 34 with a clearance fit is arranged between an outside portion in the radial direction of the side surface on the second side in the axial direction of the cylindrical portion 51 and the large-diameter-side stepped surface 39 in the axial direction. A width in the axial direction between the outside portion in the radial direction of the side surface on the second side in the axial direction of the cylindrical portion 51 and the large-diameter-side stepped surface 39 is larger than a dimension in the axial direction of the inner ring 28 by 2L. The worm 14 is able to displace in the axial direction with respect to the inner ring 28 by an amount of 2L.

In the present example, an end portion on the second side in the axial direction of the worm 14 is supported by another support bearing 43 so as to be able to rotate and displace in the axial direction with respect to the worm housing portion 19.

In the present example, the support bearing 43 is composed of a deep-groove ball bearing. That is, the support bearing 43 has an outer ring 44; an inner ring 45; and a plurality of rolling elements each composed of a ball arranged between a deep-groove-type outer ring raceway provided on an inner circumferential surface of the outer ring 44 and a deep-groove-type inner ring raceway provided on an outer circumferential surface of the inner ring 45.

The inner ring 45 is externally fitted and fixed to the end portion on the second side in the axial direction of the worm 14 by press fitting. The outer ring 44 is arranged inside a holding portion 47 provided on an inner circumferential surface of an end portion on the second side in the axial direction of the worm housing portion 19 so as to be capable of displacement in the radial direction and in the axial direction.

The biasing means 17 elastically biases the end portion on the second side in the axial direction of the worm 14 toward a side of the worm wheel 13. As a result, by suppressing the backlash at the engaging portion between the wheel teeth 22 and the worm teeth 23, the generation of teeth rattling noise at the engaging portion is suppressed when changing the direction of rotation of the steering wheel 2.

A specific configuration of the biasing means 17 is not particularly limited, and various conventionally known configurations of biasing means can be adopted. In the present example, the biasing means 17 is composed of a biasing leaf spring 46. The biasing leaf spring 46 biases the support bearing 43 toward the worm wheel 13 side.

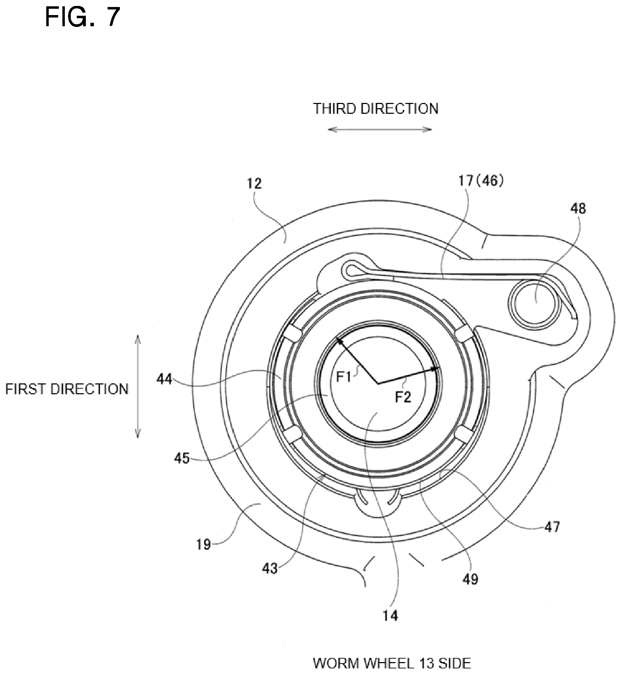

In the following description, a direction of movement of the worm 14 towards and away from the worm wheel 13 (the up-down direction in FIGS. 2 and 7), which is a biasing direction by the biasing leaf spring 46, is defined as a first direction, the axial direction of the worm housing portion 19 (the left-right direction in FIG. 2 and the front-rear direction in FIG. 7) is defined as a second direction, and a direction perpendicular to both the first direction and the second direction (the front-rear direction in FIG. 2 and the left-right direction in FIG. 7) is defined as a third direction.

As illustrated in FIG. 7, the biasing leaf spring 46 is arranged so as to extend in the third direction at an end portion between the holding portion 47 and an outer circumferential surface of the outer ring 44 that is on a side farther from the worm wheel 13 in the first direction. A base end portion (right end portion in FIG. 7) of the biasing leaf spring 46 is sandwiched and fixed between a support pin 48 fixed to the end portion on the second side in the axial direction of the worm housing portion 19 and the holding portion 47. A tip end portion (left end portion in FIG. 7) of the biasing leaf spring 46 is elastically pressed against the outer circumferential surface of the outer ring 44. As a result, the biasing leaf spring 46 elastically biases the end portion on the second side in the axial direction of the worm 14 toward the worm wheel 13 side through the support bearing 43.

When torque is transmitted from the output shaft 25 of the electric motor 10 to the worm 14 and further from the worm 14 to the worm wheel 13, and when a large torque is reversely input from the worm wheel 13 to the worm 14 due to, for example, vehicle wheels riding over a curb or a vehicle traveling on a rough road, a meshing reaction force is applied to the worm 14 from an engaging portion between the worm teeth 23 and the wheel teeth 22.

In FIG. 7, F1 and F2 represent vectors of components of the meshing reaction force in an imaginary plane perpendicular to the second direction. Specifically, F1 indicates a vector of the component when the worm 14 and the worm wheel 13 rotate in a predetermined direction, and F2 indicates a vector of the component when the worm 14 and the worm wheel 13 rotate in a direction opposite to the predetermined direction.

The components F1 and F2 include not only a component in the first direction but also a component in the third direction. The direction of the component in the first direction is opposite to the worm wheel 13. The components in the third direction of the component F1 and the component F2 faces opposite directions. In addition, a ratio between the component in the first direction and the component in the third direction differs between the component F1 and the component F2. That is, vectors of the components F1 and F2 face directions asymmetric with respect to the third direction.

The biasing leaf spring 46 also has a function of supporting a component in the first direction of the meshing reaction force applied to the worm 14. In particular, in the present example, the biasing leaf spring 46 exhibits a nonlinear spring characteristic such that a spring constant increases as an amount of deflection with respect to the first direction increases. For this reason, when the component in the first direction of the meshing reaction force becomes large, the component in the first direction can be efficiently supported by the biasing leaf spring 46.

The worm gear reducer 11 of the present example further includes, as an optional or additional element, a clamping leaf spring 49 that elastically clamps the support bearing 43 from both sides in the third direction.

The clamping leaf spring 49 is formed in a substantially partially cut cylindrical shape having a discontinuous portion at one location in the circumferential direction. The clamping leaf spring 49 is arranged between the outer circumferential surface of the outer ring 44 and the holding portion 47 in a state where the discontinuous portion is oriented toward a side opposite to the worm wheel 13 with respect to the first direction. Portions of the clamping leaf spring 49 located on both sides in the third direction are arranged between the outer circumferential surface of the outer ring 44 and the holding portion 47 so as to allow elastic deflection in the third direction.

In the present example, the portions of the clamping leaf spring 49 located on both sides in the third direction suppress looseness in the third direction of the support bearing 43 and an end portion on the second side in the axial direction of the worm 14 inside the holding portion 47.

The portions of the clamping leaf spring 49 located on both sides in the third direction exhibit a nonlinear spring characteristic such that the spring constant increases as the amount of deflection in the third direction increases. For this reason, when the component in the third direction of the meshing reaction force applied to the worm 14 from the engaging portion between the wheel teeth 22 and the worm teeth 23 becomes large, the component in the third direction can be efficiently supported by the portions of the clamping leaf spring 49 located on both sides in the third direction.

The clamping leaf spring 49 can be omitted. In this case, by making a gap in the third direction between the outer circumferential surface of the outer ring 44 of the support bearing 43 and the holding portion 47 as small as possible, it becomes possible to suppress looseness in the third direction of the support bearing 43 and the end portion on the second side in the axial direction of the worm 14 inside the holding portion 47.

The two worm dampers 16 are arranged on both sides in the axial direction of the inner ring 28 of the support bearing 15, and elastically support the worm 14 in the axial direction with respect to the inner ring 28.

In the present example, each of the two worm dampers 16 is entirely formed in a cylindrical shape, and includes a damper main body 54 and two side plates 55.

The damper main body 54 is made of rubber and formed in a cylindrical shape. The two side plates 55 are made of metal plates and formed in a circular ring shape, and sandwich the damper main body 54 from both sides in the axial direction. Side surfaces on both sides in the axial direction of the damper main body 54 are vulcanized and bonded to side surfaces of the two side plates 55 that face each other.

Of the two worm dampers 16, the worm damper 16 on the first side in the axial direction is arranged around a portion of the cylindrical portion 51 of the spacer 50 that is located farther to the second side in the axial direction than the flange portion 52, and is sandwiched in the axial direction between a side surface on the second side in the axial direction of the flange portion 52 of the spacer 50 and a side surface on the first side in the axial direction of the inner ring 28. Specifically, a side surface on the first side in the axial direction of the side plate 55 on the first side in the axial direction comes into contact with the side surface on the second side in the axial direction of the flange portion 52, and a side surface on the second side in the axial direction of the side plate 55 on the second side in the axial direction comes into contact with the side surface on the first side in the axial direction of the inner ring 28.

In a neutral state in which torque is not transmitted from the output shaft 25 of the electric motor 10 to the worm 14, the damper main body 54 of the worm damper 16 on the first side in the axial direction is elastically compressed in the axial direction between the two side plates 55. In this state, a gap having a width L in the axial direction exists between the side surface on the second side in the axial direction of the cylindrical portion 51 of the spacer 50 and the side surface on the first side in the axial direction of the inner ring 28.

Of the two worm dampers 16, the worm damper 16 on the second side in the axial direction is arranged around the large diameter portion 35 of the worm 14 and is sandwiched in the axial direction between a side surface on the second side in the axial direction of the inner ring 28 and a side surface on the first side in the axial direction of the flange portion 36 of the worm 14. Specifically, the side surface on the first side in the axial direction of the side plate 55 on the first side in the axial direction is in contact with the side surface on the second side in the axial direction of the inner ring 28, and the side surface on the second side in the axial direction of the side plate 55 on the second side in the axial direction is in contact with the side surface on the first side in the axial direction of the flange portion 36.

In the neutral state, the damper main body 54 of the worm damper 16 on the second side in the axial direction is elastically compressed in the axial direction between the two side plates 55. In this state, a gap having a width L in the axial direction exists between the side surface on the second side in the axial direction of the inner ring 28 and the large-diameter-side stepped surface 39 of the worm 14.

The meshing reaction force applied to the worm 14 from the engaging portion between the worm teeth 23 and the wheel teeth 22 includes a component in the second direction, that is, a component in the axial direction of the worm 14. The direction of this component in the axial direction is reversed depending on the rotational directions of the worm 14 and the worm wheel 13. That is, depending on the rotational directions of the worm 14 and the worm wheel 13, there are a case in which a component force fa in a direction toward the first side in the axial direction is applied to the worm 14 from the engaging portion, and a case in which a component force fb in a direction toward the second side in the axial direction is applied to the worm 14 from the engaging portion.

From the neutral state, when the component force fa in the direction toward the first side in the axial direction is applied to the worm 14, the worm 14 displaces toward the first side in the axial direction while further axially compressing the damper main body 54 of the worm damper 16 on the second side in the axial direction. This displacement stops at a time point when the large-diameter-side stepped surface 39 comes into contact with the side surface on the second side in the axial direction of the inner ring 28. That is, the stroke of this displacement is equal to the width L in the axial direction of the gap that existed between the large-diameter-side stepped surface 39 and the side surface on the second side in the axial direction of the inner ring 28 in the neutral state.

From the neutral state, when the component force fb in the direction toward the second side in the axial direction is applied to the worm 14, the worm 14 displaces toward the second side in the axial direction while further axially compressing the damper main body 54 of the worm damper 16 on the first side in the axial direction. This displacement stops at a time point when the side surface on the second side in the axial direction of the cylindrical portion 51 of the spacer 50 comes into contact with the side surface on the first side in the axial direction of the inner ring 28. That is, the stroke of this displacement is equal to the width L in the axial direction of the gap that existed between the side surface on the second side in the axial direction of the cylindrical portion 51 and the side surface on the first side in the axial direction of the inner ring 28 in the neutral state.

As described above, when the component forces fa and fb are applied to the worm 14 in either direction with respect to the axial direction, the damper body 54 of one of the worm dampers 16 is further compressed in the axial direction. For this reason, based on such compression of the damper main body 54, that is, elastic deformation, impact acting on the engaging portion can be reduced, and the occurrence of teeth rattling noise can be suppressed.

### [Second Example]

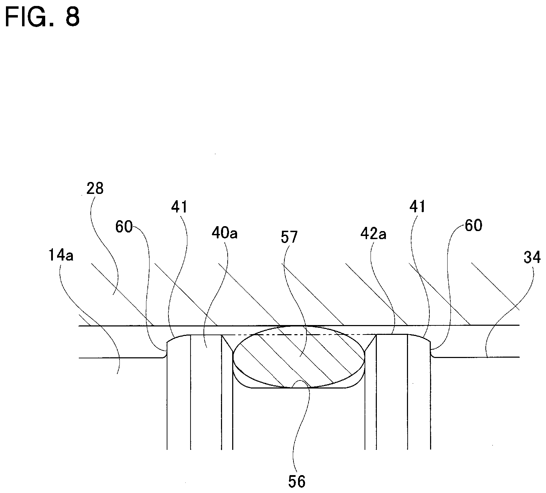

A second example of an embodiment of the present disclosure will be described with reference to FIG. 8.

In the present example, the worm 14a has an annular recessed portion 56 that opens at the middle portion in the axial direction of the outer circumferential surface of the annular protruding portion 40a.

The annular recessed portion 56 is provided over the entire circumference so as to open at the middle portion in the axial direction of the cylindrical surface portion 42a of the annular protruding portion 40a. The depth in the radial direction of the annular recessed portion 56 is larger than the height with respect to the radial direction of the annular protruding portion 40a. That is, a bottom surface of the annular recessed portion 56 is located farther on the inside in the radial direction than portions of the medium diameter portion 34 that are adjacent to both sides in the axial direction of the annular protruding portion 40a.

In the present example, the worm gear reducer includes an O-ring 57 held in the annular recessed portion 56 of the worm 14a. The O-ring 57 is elastically compressed between the bottom surface of the annular recessed portion 56 and the inner circumferential surface of the inner ring 28. As a result, a space between the inner circumferential surface of the inner ring 28 and the medium diameter portion 34 is sealed, and looseness in the radial direction between the inner ring 28 and the end portion on the first side in the axial direction of the worm 14a is suppressed. Other configurations and operational effects of the second example are the same as those of the first example. The configuration and the effects of the other parts of the second example are similar to those of the first example.

### [Third Example]

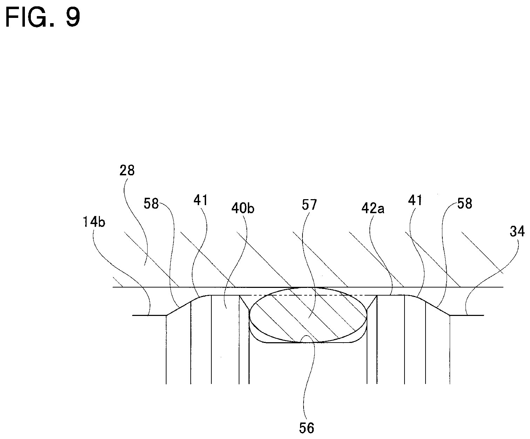

A third example of an embodiment of the present disclosure will be described with reference to FIG. 9.

In the present example, the annular protruding portion 40b of the worm 14b includes inclined surface portions 58 each having a partial conical shape on the outer circumferential surface of portions of end portions on both sides in the axial direction adjacent to the outside in the axial direction with respect to each of the two contact end portions 41 (on sides opposite to the cylindrical surface portion 42a with respect to the axial direction), each of the inclined surface portions 58 being inclined in a direction toward the inside in the radial direction as going toward the outside in the axial direction. An end portion on the outside in the axial direction of each of the inclined surface portions 58 is connected to portions of the medium diameter portion 34 that are located on both sides in the axial direction of the annular protruding portion 40b. Each of the inclined surface portions 58 does not come into contact with the inner circumferential surface of the inner ring 28 even when the worm 14b swings with respect to the inner ring 28. By providing the inclined surface portions 58, an effect is obtained that stable contact with the inner ring 28 can be achieved even when the shape of the contact end portions 41 changes due to wear or the like. The configuration and the effects of the other prats of the third example are similar to those of the second example.

### [Fourth Example]

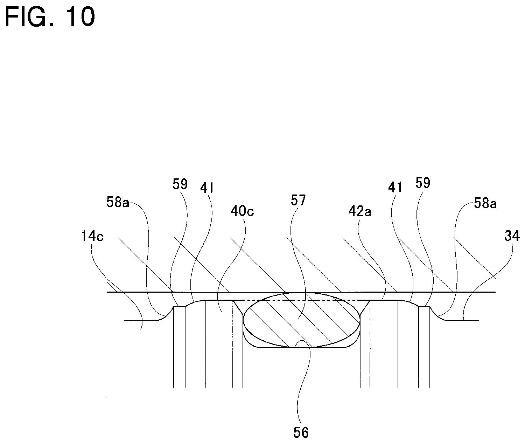

A fourth example of an embodiment of the present disclosure will be described with reference to FIG. 10.

In the present example, the annular protruding portion 40c of the worm 14c includes small-diameter cylindrical surface portions 59 on the outer circumferential surface of portions of end portions on both sides in the axial direction adjacent to the outside in the axial direction with respect to each of the two contact end portions 41 (on sides opposite to the cylindrical surface portion 42a with respect to the axial direction), and includes inclined surface portions 58a each having a concave arc-shaped cross section on the outer circumferential surface of portions adjacent to the outside in the axial direction with respect to respective each of the small-diameter cylindrical surface portions 59, each of the inclined surface portions 58a being inclined in a direction toward the inside in the radial direction as going toward the outside in the axial direction. An end portion on the outside in the axial direction of each of the inclined surface portions 58a is connected to portions of the medium diameter portion 34 that are located on both sides in the axial direction of the annular protruding portion 40c. Each of the small-diameter cylindrical surface portions 59 and the inclined surface portions 58a does not come into contact with the inner circumferential surface of the inner ring 28 even when the worm 14c swings with respect to the inner ring 28. By providing the small-diameter cylindrical surface portions 59 and the inclined surface portions 58a, an effect is obtained that stable contact with the inner ring 28 can be achieved even when the shape of the contact end portions 41 changes due to wear or the like. The configuration and the effects of the other parts of the fourth example are similar to those of the second example.

### REFERENCE SIGNS LIST

1 Electric power steering device
2 Steering wheel
3 Steering shaft
4 Steering column
5a, 5b Universal joint
6 Intermediate shaft
7 Steering gear unit
8 Electric assist device
9 Pinion shaft
10 Electric motor
11 Worm gear reducer
12 Housing
13 Worm wheel
14, 14a, 14b, 14c, 14z Worm
15 Support bearing
16 Worm damper
17 Biasing means
18 Wheel housing portion
19 Worm housing portion
20 Retaining ring
21 Cover
22 Wheel teeth
23 Worm teeth
24 Female spline portion
25 Output shaft
26 Male spline portion
27 Outer ring
28 Inner ring
29 Rolling elements
30 Fitting surface portion
31 Stepped surface
32 Retaining ring
33 Small diameter portion
34 Medium diameter portion
35 Large diameter portion
36 Flange portion
37 Engaging groove
38 Small-diameter-side stepped surface
39 Large-diameter-side stepped surface
40, 40a, 40b, 40c, 40z Annular protruding portion
41, 41z Contact end portion
42, 42a, 42z Cylindrical surface portion
43 Support bearing
44 Outer ring
45 Inner ring
46 Biasing leaf spring
47 Holding portion
48 Support pin
49 Clamping leaf spring
50 Spacer
51 Cylindrical portion
52 Flange portion
53 Crimped portion
54 Damper main body
55 Side plate
56 Annular recessed portion
57 O-ring
58, 58a Inclined surface portion
59 Small-diameter cylindrical surface portion
60 End surface in the axial direction

## Claims

1. A worm gear reducer includes:
a housing;
a worm wheel having wheel teeth on an outer circumferential surface thereof and rotatably supported inside the housing;
a worm having worm teeth on an outer circumferential surface thereof that engage with the wheel teeth and rotatably supported inside the housing;
a support bearing including an outer ring fixed to the housing and an inner ring externally fitted to an end portion on a first side in an axial direction of the worm with a clearance fit, the support bearing supporting the end portion on the first side in the axial direction of the worm with respect to the housing so as to be capable of rotation, swing displacement, and axial displacement;
a biasing means elastically biasing an end portion on a second side in the axial direction of the worm toward a side of the worm wheel; and
two worm dampers arranged on both sides in the axial direction of the inner ring and elastically supporting the worm in the axial direction with respect to the inner ring;
the worm having an annular protruding portion at a portion located on an inside in a radial direction of the inner ring, the annular protruding portion protruding farther to an outside in the radial direction than portions adjacent to both sides in the axial direction thereof;
the annular protruding portion having two contact end portions at end portions on both sides in the axial direction of an outer circumferential surface thereof, the two contact end portions restricting further inclination of the worm with respect to the inner ring by coming into contact with an inner circumferential surface of the inner ring when the worm is inclined to a maximum inclination angle with respect to the inner ring; and
each of the two contact end portions composed of a convex curved surface.

2. The worm gear reducer according to claim 1, wherein a radius of curvature of the convex curved surface is 0.2 mm or more and 3.0 mm or less.

3. The worm gear reducer according to claim 1 or 2, wherein
the worm has an annular recessed portion that opens at a middle portion in the axial direction of the outer circumferential surface of the annular protruding portion; and
an O-ring that is elastically compressed between a bottom surface of the annular recessed portion and the inner circumferential surface of the inner ring is provided.

4. The worm gear reducer according to any of claims 1 to 3, wherein an arithmetic average roughness Ra of the two contact end portions is 1.6 µm or less.
